# EUROPÄISCHE PATENTSCHRIFT

(11) **EP 0 481 462 B1**
(45) Veröffentlichungstag und Bekanntmachung des Hinweises auf die Patenterteilung: **08.11.1995**
(21) Anmeldenummer: 91117671.7
(22) Anmeldetag: 16.10.1991
(51) Int. Cl.: B23K 26/08

(54) **Werkzeugmaschine mit einem Kopf zur Erzeugung eines Lasterstrahls zur Bearbeitung und zum Trennen von Rohren**
Machine tool with head for forming a laser beam for machining and severing tubes
Machine-outil pourvue d'une tête produisant un faisceau laser pour l'usinage et pour la séparation de tubes

(30) Priorität: 19.10.1990 IT 2179990
(43) Veröffentlichungstag der Anmeldung: 22.04.1992
(73) Patentinhaber: SALA S.p.A., I-38056 Levico (IT)
(72) Erfinder: Andreatta, Livio, I-38056 Levico (IT); Mosca, Claudio, I-38056 - Levico (IT)
(74) Vertreter: Mayer, Hans Benno, Dipl.-Ing.

(56) Entgegenhaltungen:
- GB-A- 2 119 223
- US-A- 4 609 807
- US-A- 4 907 732

## Beschreibung

Die vorstehende Erfindung betrift eine Werkzeugmaschine mit einem Kopf zur Erzeugung eines Laserstrahls zur Bearbeitung und zum Trennen von Rohren, besonders zur Endbearbeitung von langen Rohren, mit einem Maschinenbett, das parallel zu einem Beschickungsmagazin fuer lange Rohre angeordnet ist und Gleitfuehrungen aufweist.

Es ist eine Werkzeugmaschine zum Schneiden von Rohren bekannt geworden, die aus einer Zufuehrvorrichtung besteht, die in gesteuerter Weise laengs dem Maschinenbett verfahrbar ist. Am Ende des Maschinenbettes ist ein Kopf zur Erzeugung eines Laserstrahls vorgesehen, der als Werkzeug zum Schneiden des Rohres dient. In dieser bekannten Maschine ist ein selbzentrierendes Spannfutter vorgesehen, mit dem das rueckwaertige Ende des Rohres erfasst werden kann. Das Rohr wird mit dieser Vorrichtung in nicht gesteuerter Weise in Drehbewegung versetzt, um einen einfachen Schneidvorgang am Rohr waehrend dessen Drehbewegung auszufuehren.

Es ist eine weitere Maschine bekannt geworden, mit der die Bearbeitung von Rohrstuecken moeglich ist und an diesen Rohrstuecken verschiedene Arbeitsvorgaenge unter Verwendung eines Laserstrahls ausgefuehrt werden.

Waehrend die erstgenannte, aus dem Stand der Technik bekannt gewordene Maschine einzig und allein das Abtrennen von Rohrstuecken von einem langen Rohr erlaubt, aber nicht die Durchfuehrung von komplexeren Arbeitsvorgaengen am Werkstueck ermoeglicht, kann die zweite bekannt gewordene Maschine lediglich Bearbeitungsvorgaenge an kurzen, vorher abgeschnittenen Rohrstuecken durchfuehren. Eine gesteuerte Bearbeitung und ein Schneidvorgang an sehr langen Rohren ist hingegen nicht moeglich.

US-A-4,609,807 offenbart eine Werkzeugmaschine mit einem Kopf zur Erzeugung eines Laserstrahls zum Trennen von langen Rohren, einem Maschinenständer, einer Beschickungsvorrichtung für lange Rohre, einer Vorrichtung zum gesteuerten Verschieben des Rohres in Axialrichtung, einem Spannfutter zur Aufnahme des Rohrendes und zur gesteurten Drehbewegung des Rohres während ein Laserstrahl zur Durchführung der Bearbeitungsvorgänge erzeugt wird.

Es ist Aufgabe der vorstehenden Erfindung, die Nachteile des Standes der Technik zu vermeiden und eine automatisch arbeitende Maschine vorzuschlagen, die eine Bearbeitung und ein Abtrennen von Rohren mit rundem, quadratischem oder rechteckigem Querschnitt erlaubt, wobei der Bearbeitungsvorgang direkt an einem langen Rohr durchfuehrbar ist, welches der Werkzeugmaschine direkt aus einem Rohrmagazin zugefuehrt wurde.

Diese Aufgabe wird erfindungsgemaess dadurch erzielt, dass die Parallelfuehrungen einen gesteuert antreibbaren Wagen zum gesteuerten Verschieben des Rohres in Axialrichtung aufnehmen, dass der Wagen ein Spannfutter zur Aufnahme des Rohrendes aufweist und das Spannfutter mit gesteuerter Drehbewegung antreibbar ist und auf den Parallelfuehrungen des Maschinenbettes eine gesteuert verfahrbare Lunette zur Lagerung des Rohres in unmittelbarer Naehe des Kopfes fuer die Erzeugung eines Laserstrahles vorgesehen ist, und zwischen den Parallelfuehrungen entlang des Maschinenbettes Haltearme angeordnet sind, die das Rohr mit seiner Achse in Uebereinstimmung mit der Achse des drehbaren Spannfutters lagern.

Mit einer Maschine dieser Art wird es moeglich, automatisch Werkstuecke mit unterschiedlicher Laenge direkt von langen Rohren zu erzeugen und neben einem Abschneidevorgang fuer die gewuenschten Rohrstuecke auch einen Bearbeitungsvorgang mittels Laserstrahl am Rohr vorzunehmen und dabei das Ende des Rohres mit einem beliebigen Formverlauf zu versehen und zudem in die Wand des Rohres Einschnitte oder Oeffnungen auch mit sehr komplexem Formverlauf einzuschneiden.

Der Erfindungsgegenstand wird nun genauer anhand eines Ausfuehrungsbeispieles beschrieben und in den Zeichnungen dargestellt.

Es zeigen:
Fig. 1 und 2 eine schematische Draufsicht der erfindungsgemaessen Maschine;
Fig. 3 eine Vorderansicht der Beschickungsvorrichtung;
Fig. 4 eine Seitenansicht einer Stuetzvorrichtung des Rohres;
Fig. 5 die Vorrichtung nach Fig. 4 in Vorderansicht;
Fig. 6 in Seitenansicht eine Betaetigungsvorrichtung der Rohrhalterung gemaess Fig. 4;
Fig. 7 und 8 in Vorderansicht eine selbstzentrierende Vorrichtung fuer die Halterung des Rohres in unmittelbarer Naehe des Schneidwerkzeuges;
Fig. 9 und 10 in Vorderansicht bzw. in Draufsicht eine Vorrichtung fuer die Lagerung des Rohres im Anschluss an das Schneidwerkzeug;

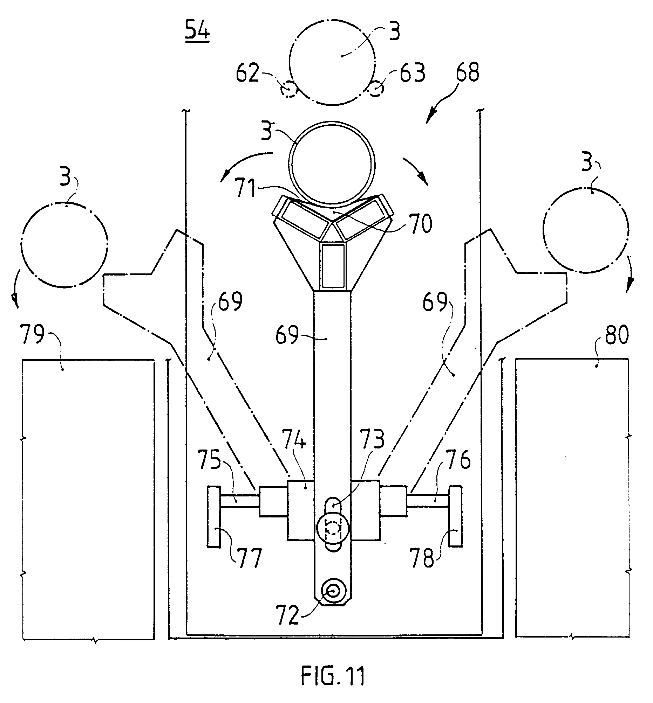

Fig. 11 eine Vorderansicht einer Entladevorrichtung des bearbeiteten Rohrstueckes;

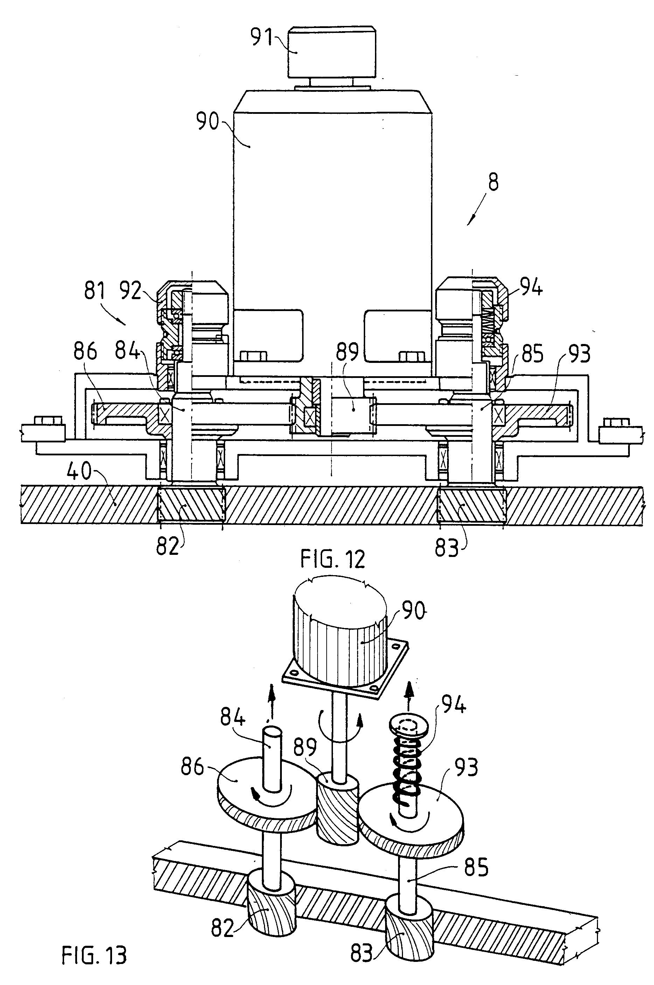

Fig. 12 eine schematische Schnittdarstellung einer Vorrichtung zum Beseitigen des Spiels in der Vorschubeinrichtung des Vorschubwagens;
Fig. 13 in perspektivischer Darstellung eine Einrichtung fuer den Spielausgleich gemaess Fig. 12;
Fig. 14 und 15 eine Schnittdarstellung bzw. eine Vorderansicht einer Vorrichtung zum Absaugen der waehrend des Schneidvorganges entstehenden Daempfe und

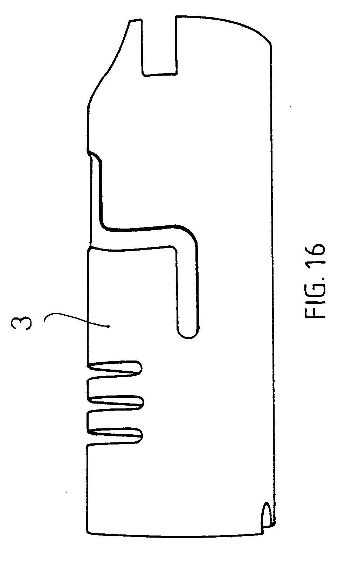

Fig. 16 in perspektivischer Darstellung ein Rohrstueck zur Darstellung eines bearbeiteten Werkstueckes.

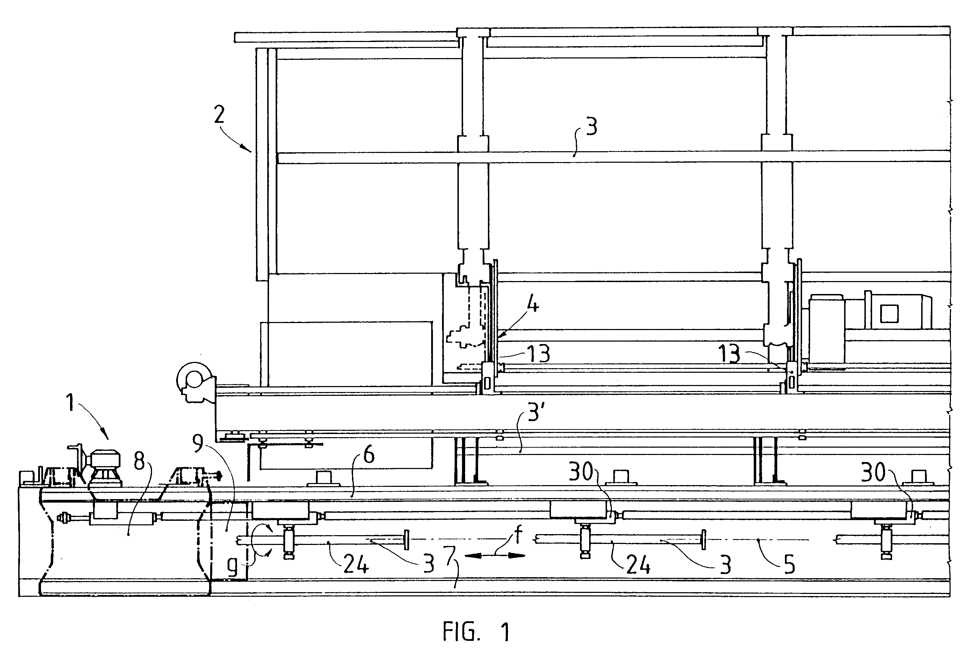

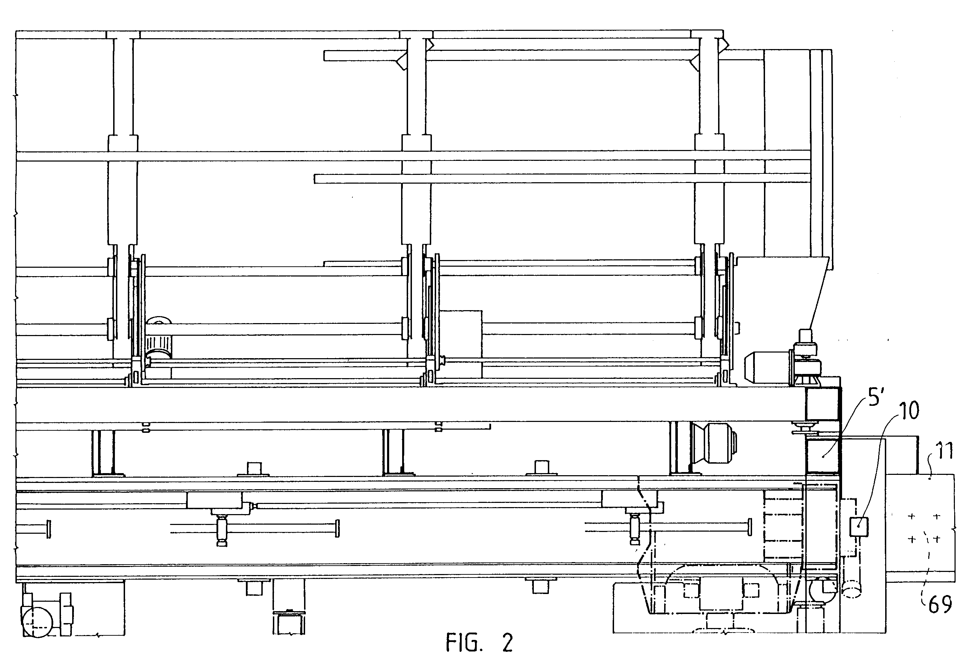

Wie der Fig. 1 und 2 zu entnehmen ist, besteht die gesamthaft mit 1 gekennzeichnete Werkzeugmaschine aus einem Magazin 2 zur Aufnahme von einer Vielzahl von zu bearbeitenden Rohren 3. Die Rohre koennen erhebliche Laenge, z.B. bis zu 6,5 m aufweisen.

Mit einer Vorrichtung 4, die an sich aus dem Stand der Technik bekannt ist, kann das Rohr in eine Wartestellung 3' gefoerdert werden. Aus dieser Wartestellung wird das Rohr unter Verwendung von noch genauer zu beschreibenden Vorrichtungen in das Maschinenbett 5 gefoerdert.

Das Maschinenbett 5 weist zwei Parallelfuehrungen 6 und 7 auf. Auf den Parallelfuehrungen 6 und 7 ist verschiebbar ein Wagen 8 angeordnet, der mit einem drehbar angetriebenen Spannfutter 9 ausgeruestet ist. Das Spannfutter 9 dient dazu, das Rohr 3, das in das Maschinenbett 5 gefoerdert wurde, zu spannen.

Der Wagen 8 weist Einrichtungen auf, die dazu dienen, dem Wagen 8 eine gesteuerte Hin- und Herbewegung gemaess Pfeil f zu verleihen. Ferner sind Antriebseinrichtungen vorgesehen, um auch dem Spannfutter 9 eine gesteuerte Drehbewegung zu verleihen, wie durch den Pfeil g verdeutlicht. An einem Ende 5' des Maschinenbettes 5 ist ein Kopf 10 zur Erzeugung eines Laserstrahls vorgesehen. Dieser Laserstrahl wird als Werkzeug zum Bearbeiten sowie zum Durchtrennen des Rohres 3 verwendet. Dafuer ist das Rohr 3 unter Verwendung des Wagens 8 und des drehbaren Spannfutters 9 gesteuert bewegbar. Dem Bearbeitungskopf 10 folgt eine Einrichtung 11 zum Abfoerdern des Rohres 3, die im Anschluss noch genauer beschrieben werden wird.

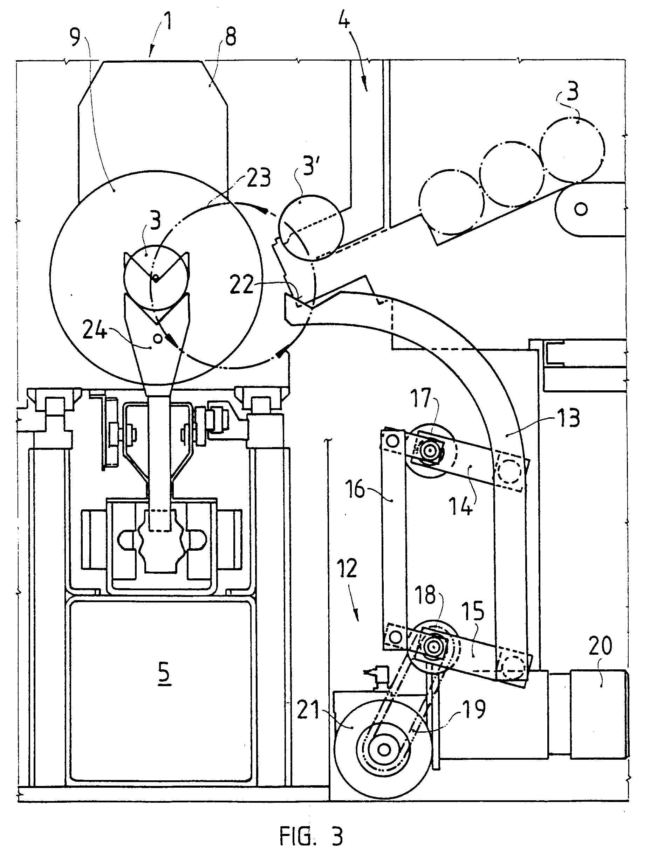

Um das Rohr 3 vom Magazin 4 fuer die Rohre in die Maschine zu foerdern, sind in der Naehe des Magazins 4, in Laengsrichtung des Bettes 5 der Maschine 1 verteilt, Beladevorrichtungen vorgesehen, wie in Fig. 3 dargestellt.

Jede gesamthaft mit 12 gekennzeichnete Beladevorrichtung besteht aus einem Beladearm 13, der als abgekroepfter Arm ausgebildet ist. Mehrere Arme 13 sind entlang dem Maschinengestell 5 verteilt angeordnet. Jeder Arm 13 ist gelenkig mit Hebeln 14 und 15 verbunden, deren Ende durch eine senkrecht angeordnete Stange 16 verbunden sind. Es wird somit ein parallelogrammartiges Gebilde 13,14,15,16 geschaffen. Die Hebel 14 und 15 werden von einer Welle 17 bzw. 18 aufgenommen. In vorteilhafter Weise sind die Wellen 17 und 18 am Gestell des Magazins 4 fuer die Rohre 3 gelagert. Die untere Welle 18 wird ueber einen Riemen oder eine Kette 19 gesteuert angetrieben, Bauteile, die von einem steuerbaren Motor 20, in vorteilhafter Weise unter Zwischenschaltung eines Reduziergetriebes 21, das auf die Welle 18 einwirkt, die sich ueber die gesamte Laenge des Maschinenbettes erstreckt.

Das obere Ende eines jeden gekroepften Armes 13 weist eine Aufnehmung 22 fuer die Aufnahme eines Rohres 3' auf. Das Rohr 3' befindet sich in Wartestellung. Durch eine Drehbewegung der Welle 18 erfolgt ein Antrieb saemtlicher Arme 13, in der Art, dass sich die Ausnehmung 22 entlang einer kreisfoermigen Bahn bewegt, wie dies mit Strichpunktlinien 23 verdeutlicht ist. Sobald die Arme 13 eine Aufwaertsbewegung durchfuehren, erfolgt ein Abheben des Rohres 3 aus dessen Wartestellung 3' und ein darauffolgendes Ablegen des Rohres 3 auf gesonderten Lagerarmen 24, die im Anschluss noch genauer beschrieben werden.

Sobald das Rohr 3 auf den Lagerarmen 24 abgelegt wurde, erfolgt durch eine gesteuerte Bewegung des Wagens 8 ein Ergreifen und Spannen des Endstueckes des Rohres 3 im Spannfutter 9.

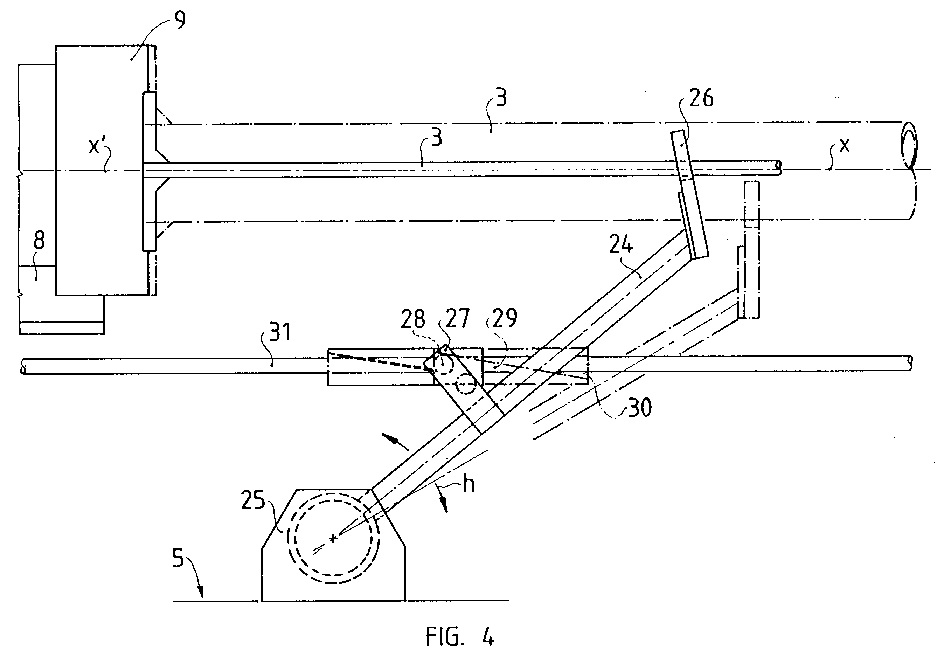

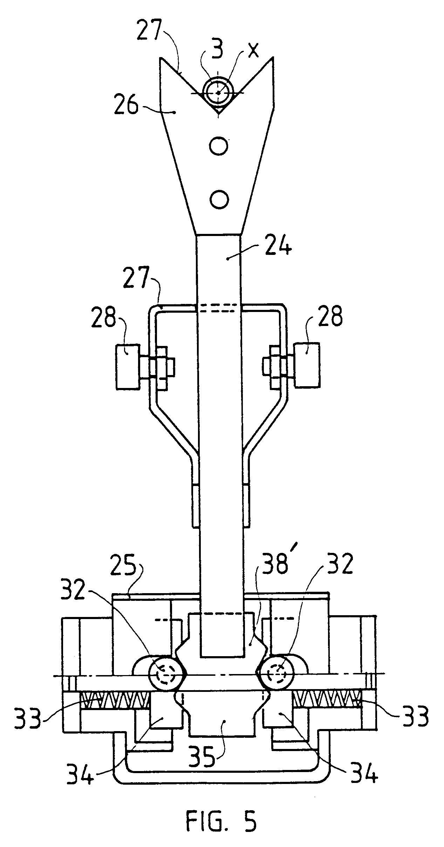

In den Figuren 4 und 5 sind die Lagerarme 24 dargestellt, die ueber die gesamte Laenge des Maschinenbettes 5 verteilt angeordnet sind. Die Arme 24 dienen zur Lagerung des Rohres 3 in der Art, dass die mit X gekennzeichnete Laengsachse des Rohres 3 stets mit der Drehachse X' des drehbaren Spannfutters 9, das vom Wagen 8 aufgenommen wird, uebereinstimmt. Jeder Arm 24 ist an seinem unteren Ende von einem Lager 25 aufgenommen, das eine Schwenkbewegung des Armes 24, wie durch den Pfeil (h) dargestellt, erlaubt. Das frei Ende des Armes 24 nimmt eine Lagerplatte 26 auf, die in vorteilhafter Weise aus Kunststoff besteht, und diese Lagerplatte 26 weist an ihrer Oberseite einen V-foermigen Einschnitt 27 auf, um das Rohr 3 sicher aufzunehmen.

Im Inneren eines jeden Lagers 25 sind Federmittel angeordnet, die dazu neigen, jedem Arm 24 eine nach oben gerichtete Bewegungskomponente aufzupraegen.

Um die Lagerplatte 26 des Armes 24 in verschiedenen Lagen, entsprechend dem kleinsten oder dem groessten Durchmesser des Rohres 3 anzuordnen, ist jeder Arm 24 mit einem Buegel 27 versehen, der eine Gleitrolle 28 aufnimmt, die mit der schiefen Ebene 29 einer in seiner Position einstellbaren Leiste 30 in Wirkverbindung steht. Jede Leiste 30 ist gegenueber dem ihr zugeordneten Arm 24 in ihrer Lage einstellbar und dazu mit einer Steuerstange 31 verbunden, die sich ueber die gesamte Laege des Maschinengestelles erstreckt. Unter Zuhilfenahme von Verstelleinrichtungen, wie z.B. einem Handrad oder einem steuerbaren Antriebsmotor, wird es moeglich, saemtliche Leisten 30 in Horizontalrichtung gleichzeitig zu verstellen. Dadurch wird es moeglich, dank der Vorsehung der geneigten Steuerflaechen 29, einen Anschlag festzulegen und ueber diesen die Positon der Lagerplatten 26 einzustellen.

Wie der Fig. 4 zu entnehmen ist, erfolgt durch das Einstellen der Leisten 30 (mit durchgehenden Linien dargestellt) eine Schwenkbewegung des Armes 24 nach oben, wodurch Rohre mit kleinem Durchmesser abgestuetzt werden koennen. Werden hingegen die Leisten 29 sowie die zugeordneten geneigten Ebenen 30, in die mit gestrichtelten Linien dargestellte Lage verschoben, so entspricht diese Lageanordnung des Armes 24 einer kleineren Schwenkbewegung, wodurch sich die Aufnahme 26 in einer Lage unterhalb der Achse X befindet. Es wird somit die Moeglichkeit geschaffen, in zentrierter Weise auch Rohre 3 mit sehr grossem Durchmesser zu lagern.

In Fig. 5 ist der Arm 24 und der Lagerbock 25 in Vorderansicht und teilweise im Schnitt dargestellt. Dieser Darstellung kann deutlich die Ausfuehrungsform sowie die Anordnung der Buegel 27 entnommen werden, die die Gleitrollen 28 aufnehmen.

Im Inneren des Lagerbockes 25 sind vorgespannte Federn 33 angeordnet, die mit Kugellagern 32 ausgeruestete Teller 34 gegen endseitig angeordnete Nocken 35 druecken, die ihrerseits mit dem unteren Ende eines jeden Armes 24 verbunden sind. Diese Vorrichtung verleiht dem Arm 24 stets das Bestreben, sich stets nach oben, d.h. in Richtung der Achse X des Rohres 3, zu bewegen.

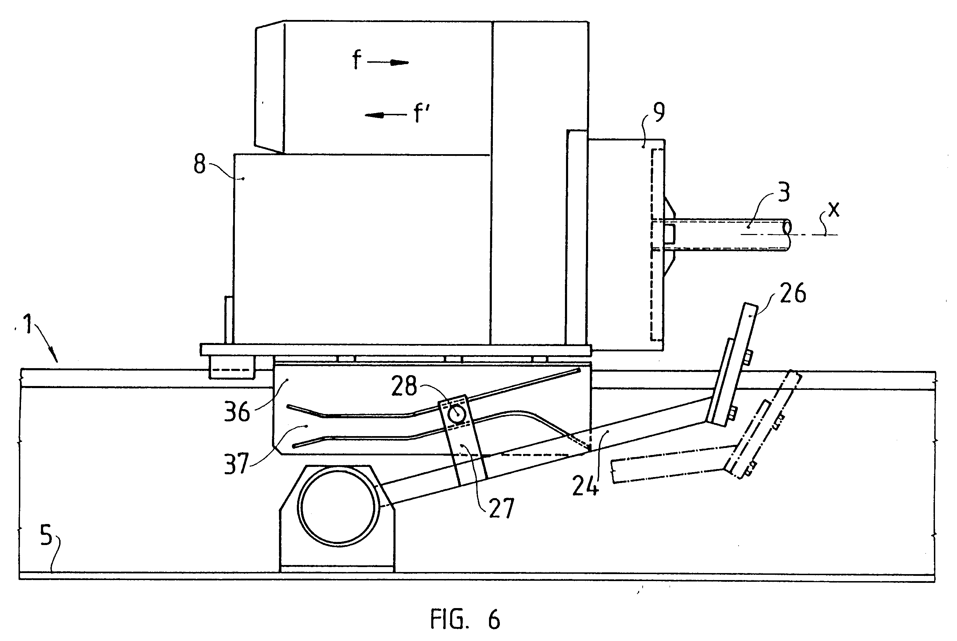

Wie der Fig. 6 zu entnehmen ist, ist unter dem Wagen 8, der das drehbar gelagerte Spannfutter 9 zur Aufnahme des Rohres 3 aufnimmt, eine Steuereinrichtung 36 montiert, die mit einer Betaetigungskurve oder Betaetigungsnut 37 ausgeruestet ist, die auf Rollen 28 eines Buegels 27, der mit jedem Haltearm 24 verbunden ist, einwirkt. Diese Steuerkurve 37 ist in ihrer Form derartig ausgebildet, dass waehrend der Vorschubbewegung (Pfeil f) des Wagens 8, die Rollen 28 mit der Steuerkurve in Wirkverbindung treten und durch diese ein Absenken des Armes 24 sowie der entsprechenden Halteplatte 26 dann erfolgt, wenn sich das Futter 9 dem Haltearm 6 naehert, Haltearm, der ueblicherweise bis zur Achse X nach oben ragt.

Sobald der Arm 24 nach unten gedrueckt wird, ueberwinden die im Inneren des Lagerbockes 25 vorgesehenen Lager 32 die Vorspruenge 38' der Nocken 35, und durch die Federn 33 erfolgt ein Blockieren des Armes 24 in seiner abgesenkten Lage. In dieser abgesenkten Lage ist der Arm 24 annaehernd parallel zum Boden des Maschinenbettes 5 der Werkzeugmaschine 1 ausgerichtet. Bewegt sich hingegen der Wagen 8 nach rueckwaerts, wie durch den Pfeil f' dargestellt, so treten die Rollen 28 des Buegels 27 des Lagerarmes 24 erneut in die Fuehrungsnute 37 der Steuervorrichtung 36 ein, und der geschweifte Teil dieser Nut 37 bewirkt waehrend der Rueckfahrbewegung, dass die vorher nach unten gedrueckten Lagerarme 26 wieder nach oben verfahren werden, um somit erneut das Rohr 3 in der gewuenschten Lage zu halten.

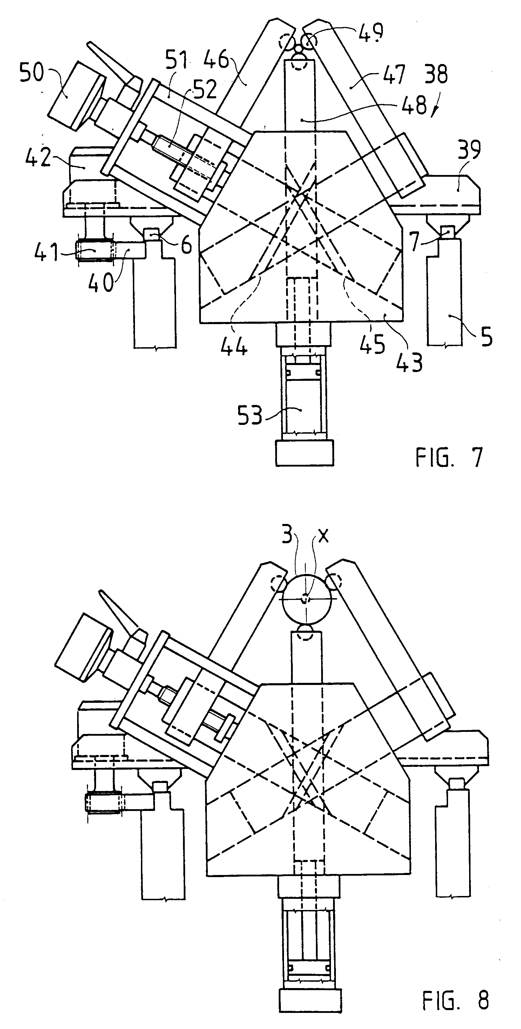

In den Figuren 7 und 8 ist eine Lagerung dargestellt, die als selbstzentrierende Lunettte ausgebildet ist. Diese Lunette, die gesamthaft mit 38 gekennzeichnet ist, besteht aus einer Grundplatte 39, die auf den Fuehrungen 6 und 7 des Maschinenbettes 5 verfahrbar ist. Mit einer Zahnstange 40, die parall zu den Fuehrungen 6 und 7 angeordnet ist, steht ein Zahnrad 41 in Wirkverbindung, das von einem steuerbaren Motor 42 angetrieben wird, der von der Platte 39 getragen wird. Durch Vorsehen eines steuerbaren Motors 42 und durch Vorsehen einer Positionsanzeigevorrichtung, z.B. eines drehbaren Encoders (nicht dargestellt) an der Platte 39, wird es moeglich, die Vorrichtung 38 genau und in jeder gewuenschten Lage laengs der Fuehrungen 6 und 7 zu positionieren. Mit der Platte 39 ist eine Halterung 43 wirkverbunden, die in geneigten Fuehrungen 44 und 45 verschiebbare Schlitten aufnimmt, die mit den Armen 46 und 47 verbunden sind und mit einem dritten Arm 48 zusammenarbeiten. Die Enden der Arme 46, 47 und 48 sind mit Kugeln 49 zur Aufnahme des Rohrs 3 ausgeruestet. Waehrend die Arme 46 und 47 von den Schlitten 44 und 45 gehalten werden, Schlitten, die auf geneigten Ebenen verfahrbar sind, ist der Arm 48 mit einem Zylinder 53 wirkverbunden, der durch Verschieben des Armes 48 eine Oeffnungsbewegung bzw. eine Schliessbewegung der Enden der Arme 46, 47 gegenueber der Achse X des Rohres 3 einleitet, wodurch es ermoeglicht wird, ein Anpassen an den kleinsten Durchmesser bzw. an den groessten Durchmesser des zu bearbeitenden Rohres vorzunehmen. Die Offnungsbewegung bzw. die Schliessbewegung der Arme 46, 47 und 48 ist entsprechend dem Durchmesser des Rohres 3 einstellbar. Zu diesem Zweck findet ein Handrad 50 Einsatz, das von einem Gestell 51 aufgenommen wird, das mit der Halterung 43 verbunden ist. Ueber das Handrad 50 und ein Gewinde 52 kann der Schlitten 45 sowie der Arm 46 entsprechend dem Durchmesser des Rohres verschoben werden, wodurch der maximale effektive Hub, der vom Zylinder 53 durchfuehrbar ist, festgelegt werden kann.

Neben der Schaffung einer genauen Lagerung fuer das Rohr 3 in der Naehe des Kopfes 10, in dem der Laserstrahl erzeugt wird, ist durch die Moeglichkeit, die Grundplatte 39 der Lunettenvorrichtung 46, 47, 48 zu verschieben, die Moeglichkeit gegeben, mit der Vorrichtung Rohrstuecke und Rohrabfall, die z.B. waehrend der Erstellung von Schlitzen, Einschnitten, Oeffnungen oder schraegliegenden Schnitten, in der Naehe des Rohrendes gebildet werden, abzufuehren.

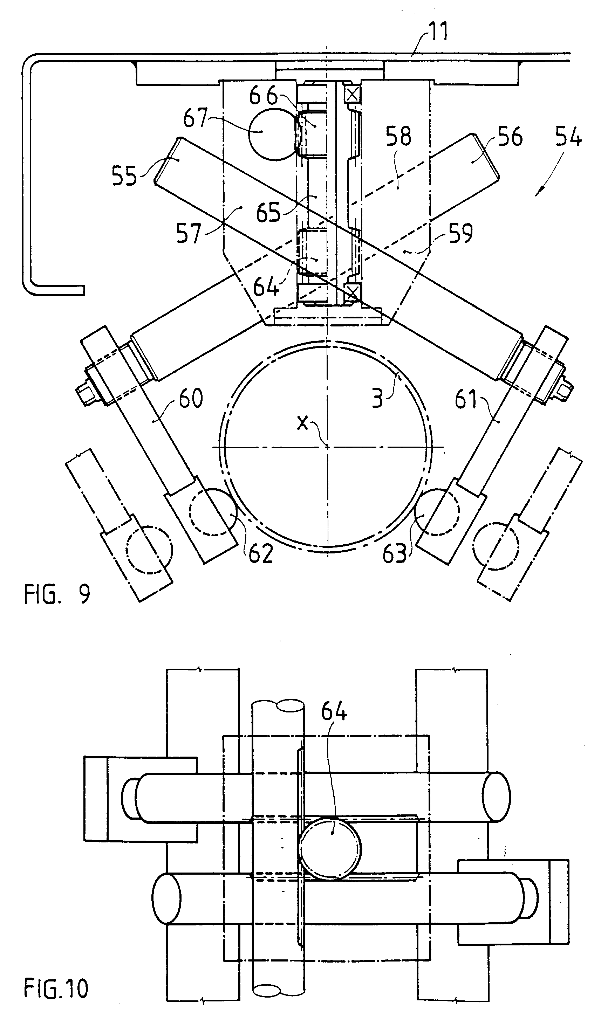

In den Figuren 9 und 10 ist eine Vorrichtung dargestellt, die in ihrer Gesamtheit mit 54 gekennzeichnet ist. Diese Vorrichtung 54 ist nach dem Werkzeug 10 der Maschinen vorgesehen. Die Vorrichtung 54 ist an den Durchmesser des Rohres 3 anpassbar und fuer die Aufnahme des zu bearbeitenden Rohres vorgesehen, d.h. um das Rohr nach der Vorrichtung zur Erzeugung des Laserstrahles genau zu lagern. In vorteilhafter Weise ist die Vorrichtung 54 am oberen Teil der Vorrichtung 11 montiert. Die Vorrichtung besteht aus Armen 55 und 66, die eine Verzahnung 57 und 58 aufweisen. Die Arme 55 und 56 sind ueberkreuzend angeordnet, wie dies in der Fig. 9 dargestellt ist. Die Arme werden verschiebbar von geeigneten Fuehrungen aufgenommen, die in einen Lagerblock 59 eingearbeitet sind, der z.B. in Gusseisen ausgefuehrt ist. Die freien Enden der Arme 55 und 56 nehmen Platten 60 und 61 auf, die Kugeln 62, 63 aufnehmen, um eine reibungsfreie Lagerung des Rohres 3 zu ermoeglichen. Mit der Verzahnung 57 und 58 steht ein Zahnrad 64 in Wirkverbindung, das zwischen den Armen 55 und 56 mit einer Welle 65 verbunden ist, die im Inneren des Blockes 59 gelagert ist. Die Welle 56 weist ein weiteres Zahnrad 66 auf, das mit einer Zahnstange 67, deren Hub uebervachbar ist, einer Drehbewegung unterzogen werden kann. Entsprechend der Drehrichtung der Welle 65 kann eine Schliessbewegung der Halterungen 60 und 61 erfolgen und diese Schliessbewegung erfolgt mit einer derartigen Genauigkeit, dass gewaehrleistet ist, dass die Achse X des Rohres 3 stets mit der Achse X' des drehbaren Spannfutters 9 uebereinstimmt. Zum Entladen des Rohres 3 ist es ausreichend, die Zahnstange 67 zu bewegen, um die Arme 60, 61 zu oeffnen, wie dies mit gestrichelten Linien in der Fig. 9 dargestellt ist.

In vorteilhafter Weise ist unter der Vorrichtung 54 eine Einrichtung 68 vorgesehen, um das von der Vorrichtung 54 entladene Rohr 3 in Empfang zu nehmen. Diese Einrichtung 68 besteht aus einem Arm 69, der sich ueber die maximale Laenge des Rohres 3 erstreckt. An der Oberseite weist der Arm 69 eine V-foermige Ausnehmung 70 auf.

Die Ausnehmung 70 wird in vorteilhafter Weise von einem Schutzband, z.B. einem Band aus Kunststoff 71 abgedeckt, wodurch es moeglich wird, das Rohr 33 in gedaempfter Weise von der Vorrichtung 54 zu entladen.

Der Arm 69 ist im Punkt 72 gelagert und kann eine Schwenkbewegung durchfuehren. Um diese Schwenkbewegung durchzufuehren, ist im Arm 69 eine festerartige Oeffnung 73 eingearbeitet, die mit einem Zylinder 74 wirkverbunden ist, von dem Zylinder ragen von beiden Seiten Kolbenstangen 75 und 76 ab, die mit Bloecken 77 und 78 verbunden sind, die ihrerseits an der Vorrichtung 68 befestigt sind. Unter Zuhilfenahme des Zylinders 74 wird es moeglich, den Arm 69 mit schwenkbarer Bewegung anzutreiben. Wenn der Arm 69 in der in Fig. 1 mit durchgehenden Linien dargestellten Stellung angeordnet ist, kann in die Aufnahme 70, 71 das bearbeitete Rohr 3 abgelegt werden. Mit einem Betaetigen des Zylinders 74 kann der Arm 69 nach links oder nach rechts verschwenkt werden, um somit das Rohrstueck 3 in gesteuerter Weise entsprechend dem vorgegebenen Bearbeitungsprogramm in einen Behaelter 79 bzw. in einen Behaelter 80 abzulegen. Wird der Arm 69 in nach links verschwenkter Lage oder in nach recht verschwenkter Lage angehalten, so wird es moeglich, Abfallstuecke 3, die nicht mehr fuer die Produktion geeignet sind, su entladen und mit nicht genauer dargestellten Einrichtungen abzufoerden.

Um eine praezise Vorschubbewegung des Wagens 8 zu ermoeglichen, ist es unbedingt erforderlich, eine Vorrichtung zur Beseitung des Lagerspiels zwischen den Vorschubmitteln des Wagens 8 vorzusehen. Eine derartige Einrichtung ist in den Zeichnungen 12 und 13 dargestellt. Genauer gesagt, besteht diese Vorrichtung, die gesamthaft mit 81 bezeichnet ist, aus zwei Zahnraedern 82 und 83 mit Schraegverzahnung. Die Zahnraeder stehen mit einer Zahnstange 40 in Wirkverbindung, die parallel zu den Gleitfuehrungen 6 und 7, die den Wagen 8 aufnehmen, angeordnet sind. Die Zahnraeder 82, 83 sind mit einer Welle 84 bzw. 85 fest verbunden. Die Welle 84 steht mit einem weiteren Zahnrad 86 in Verbindung, wogegen die Welle 85 mit einem Zahnrad 93 verbunden ist. Beide Zahnraeder 86 und 93 werden ueber ein Ritzel 89 angetrieben, das mit der Welle eines Antriebsmotores 90, der auf dem Wagen 8 montiert ist, vebunden ist.

In vorteilhafter Weise ist mit dem Motor 90 ein Encoder 91 oder aehnliches Anzeigemittel der Lage des Wagens 8 gegenueber der Zahnstange 40 vorgesehen. Zur Beseitigung von Spiel und Lagerluft, die sich auch bei hochpraezise ausgefuehrter Zahnstange 40 einstellen koennen, steht das Zahnrad 82 sowie die Welle 84 mit einer Gewindehuelse 92 in Wirkverbindung. Durch Betaetigen der Gewindehuelse 92 wird eine Axialverschiebung der Welle 84 nach oben und gleichzeitig ein Verdrehen der Zahnraeder 86, 89 und 93 erzielt. Diese Drehbewegung wird aufgrund der Schraegverzahnung der Zahnraeder erreicht. Die Drehbewegung fuehrt auch zu einer Drehung der Wellen 84 und 85 bis zur vollstaendigen Beseitigung des in der Baueinheit vorhandenen Spiels. Wenn man beruecksichtigt, dass besonders bei sehr langen Zahnstangen 40, aufgrund unvermeidlicher Bearbeitungsfehler` die an einem bestimmten Teilstueck der Zahnstange 40 vorhanden sein koennten, die ueber die Gewindehuelse 92 durchgefuehrte Einstellung unwirksam werden koennte, ist es unbedingt erforderlich, eine weitere Vorrichtung zur automatischen Spielbeseitigung vorzusehen. Diese Zusatzeinrichtung besteht aus Federmitteln 94, die auf der Welle 85 angeordnet sind. Die Federmittel 94, z.B. Tellerfedern, sind mit Vorspannung montiert und haben deshalb staendig die Tendenz, die Welle 85 und die Zahnraeder 83 und 93 nach oben zu verschieben. Durch diese Bewegung der Welle 85 nach oben wird erneut eine Drehbewegung in die Zahngruppe eingeleitet und somit wird ein automatischer Spielausgleich erzielt. Dadurch wird gewaehrleistet, dass die Vorschubbewegung des Wagens 8 mit groesstmoeglicher Praezision erfolgt.

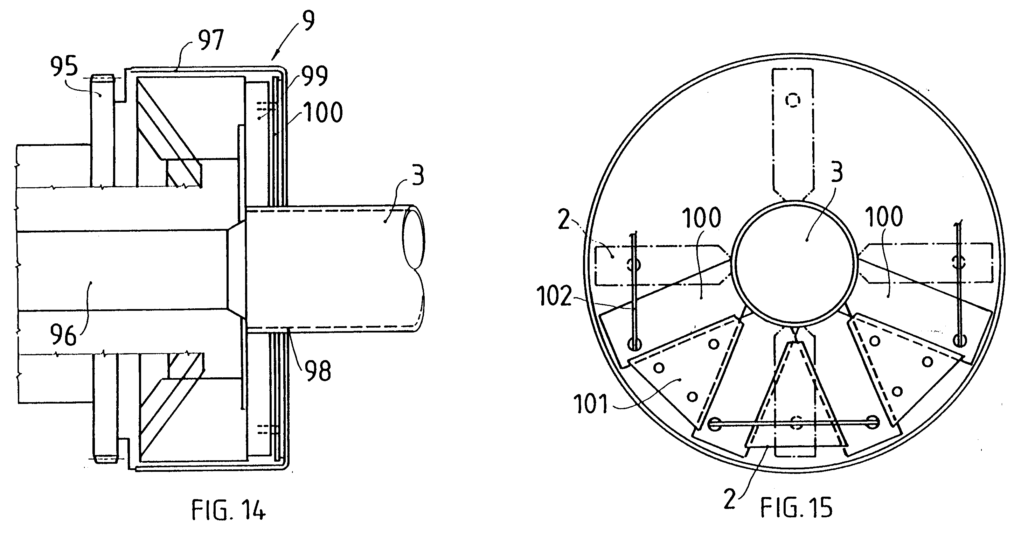

Beruecksichtigt man, dass waehrend des Schneidvorganges sowie waehrend eines Bearbeitungsvorganges des Rohres 3 unter Verwendung eines Laserstrahls Metalldaempfe, Rauch und Schlackenstaub erzeugt werden, so wird verstaendlich, dass diese Daempfe staendig abgesaugt werden muessen, um mit Sicherheit Schaden an Personen zu vermeiden. Ferner muss gewaehrleistet werden, dass sich in unerwuenschter Weise aufgeschmolzenes Metall an der Innenseite des Rohres 3 ablagert. Um dieses Beduerfnis zu befriedigen, wird eine zusaetzliche Vorrichtung vorgeschlagen, die in den Figuren 14 und 15 dargestellt ist. Das drehbare Spannfutter 9, das vom Stand der Technik her bekannt ist und steuerbar, unter Zuhilfenahme eines Zahnkranzes 95 gedreht werden kann, weist einen mittigen Durchgang 96 zum Absaugen der schaedlichen Daempfe auf. Die Absaugoeffnung steht mit dem Inneren des zu bearbeitenden Rohres 3 in Wirkverbindung.

Das Spannfutter 9 wird abgedichtet von einem Deckel 97, in vorteilhafter Weise einem Blechdeckel umschlossen. Der Deckel weist an seiner Vorderseite eine Oeffnung 98 fuer die Einfuehrung des Rohres auf; das Rohr wird im Inneren des Spannfutters 9 mit bekannten Spannbacken 99 blockiert. Im dargestellten Beispiel sind vier Spannbacken 99 vorgesehen, die um 90° versetzt angeordnet sind. Um die Absaugvorrichtung 96 gegenueber dem Aussenumfang des Rohres 3 abzudichten, um dadurch einen maximalen Absaugeffekt zu erzielen, ist, wie in Fig. 15 deutlicher dargestellt, zwischen dem Deckel 97 und den Spannbacken 99 eine lamellenartige Blende 100 vorgesehen. Die Lamellen sind verschiebbar in Fuehrungen 101 gelagert, die mit der Abdeckhaube verbunden sind. Die Lamellen 100 bilden eine Blende, die sich automatisch an den Aussendurchmesser des Rohres 3 anpasst. Um ein automatisches Verschieben der Lamellen 100 der Blende zu ermoeglichen, sind die Lamellen 100 unter Zuhilfenahme einer stabartig ausgebildeten Feder 102 stets mit einer Spannbacke 2, die zwischen zwei seitlichen Lamellengruppen 102 angeordnet ist, verbunden. Unter Zuhilfenahme der stabfoermigen Federn 102 ist es moeglich, den Lamellen 100 eine leichte Vorspannung zu verleihen, die einen einwandfreien Schliessvorgang auch bei unregelmaessig ausgebildeten Rohren gewaehrleistet.

## Patentansprüche

1. Werkzeugmaschine, mit einem Kopf (10) zur Erzeugung eines Laserstrahls, zum Bearbeiten und Trennen von Rohren (3), mit einem Maschinenbett (5) das parallel zu einem Beschickungsmagazin (2) fuer lange Rohre angeordnet ist und Parallelfuehrungen (6, 7) aufweist, **dadurch gekennzeichnet**, dass die Parallelfuehrungen (6, 7) einen gesteuert antreibbaren Wagen (8) zum gesteuerten Verschieben eines Rohres (3) in Axialrichtung aufnehmen, dass der Wagen (8) ein Spannfutter (9) zur Aufnahme des Rohrendes aufweist und das Spannfutter (9) mit gesteuerter Drehbewegung antreibbar ist und auf den Parallelfuehrungen (6, 7) des Maschinenbettes (5) eine gesteuert verfahrbare Lunette (38) zur Lagerung des Rohres (3) in unmittelbarer Naehe des Kopfes (10) fuer die Erzeugung eines Laserstrahles vorgesehen ist und zwischen den Parallelfuehrungen (6, 7) entlang des Maschinenbettes (5) Haltearme (24) angeordnet sind, die das Rohr (3) mit seiner Achse (X) in Uebereinstimmung mit der Achse (X') des drehbaren Spannfutters lagern.

2. Werkzeugmaschine nach Anspruch 1, **dadurch gekennzeichnet**, dass zwischen dem Magazin (2) und dem Maschinenbett (5) eine Anzahl gekroepfter Arme (13) vorgesehen ist, die in Laengsrichtung des Maschinenbettes (5) angeordnet sind, dass jeder Arm (13) gelenkig mit weiteren Hebeln (14, 15) verbunden ist, deren Enden durch eine Strebe (16) verbunden sind, um eine parallelogrammartige Vorrichtung zu bilden, dass die Arme (14, 15) des Parallelogramms von Haltewellen (17, 18) aufgenommen sind und eine dieser Haltewellen (18) ueber einen steuerbaren Motor (21) drehbar angetrieben ist.

3. Werkzeugmaschine nach Anspruch 2, **dadurch gekennzeichnet**, dass jeder abgekroepfte Arm (13) an seiner Oberseite eine V-foermige Aufnahme (22) fuer das zu transportierende Rohr (3') aufnimmt.

4. Werkzeugmaschine nach einem oder mehreren der Ansprueche 1 bis 3, **dadurch gekennzeichnet**, dass fuer die Lageanordnung des Endstueckes (26) eines jeden Haltearmes (24), in Abhaengigkeit vom Durchmesser des Rohres (3), jeder Arm (24) mit einem Buegel (27) versehen ist, der Gleitrollen (28) aufweist, die mit einer schiefen Ebene (29) einer Steuerleiste (30) in Verbindung stehen und diese Leiste (30) gesteuert in horizontaler Richtung verschiebbar ist.

5. Werkzeugmaschine nach Anspruch 4, **dadurch gekennzeichnet**, dass die mit einer schiefen Ebene versehenen Steuerleisten (30) durch eine Betaetigungsstange (31) untereinander verbunden sind und die Betaetigungsstange (31) mit einer Einstellvorrichtung verbunden ist.

6. Werkzeugmaschine nach einem oder mehreren der Ansprueche 1 bis 5, **dadurch gekennzeichnet**, dass jeder Haltearm (24) schwenkbar von einem Lagerbock (25) aufgenommen ist, der mit dem Maschinenbett (5) verbunden ist, dass im Inneren des Lagerbockes (25) vorgespannte Federmittel (33) angeordnet sind, die tellerartige (34) mit Lagern (32) versehene Vorrichtungen gegen eine nockenartige Steuerkurve (38') druecken, die mit dem unteren Ende des Armes (24) wirkverbunden ist, um dem Arm eine nach oben oder nach unten gerichtete Bewegungskomponente aufzupraegen.

7. Werkzeugmaschine nach einem oder mehreren der Ansprueche 1 bis 6, **dadurch gekennzeichnet**, dass unter dem Wagen (8) zum Verschieben des Rohres (3) eine Fuehrungs- oder Steuerkurve (37) vorgesehen ist, die waehrend der Vorschubbewegung des Wagens (8) in Richtung des Pfeiles (f) die Rollen (28) des Buegels (27) eines jeden Haltearmes (24) derartig beeinflusst, dass der Haltearm (24) nach unten verschwenkt wird, und bei Vorschub des Wagens (8) in Richtung des Pfeils (f') eine Verschwenkung der Arme (24) nach oben erfolgt.

8. Werkzeugmaschine nach einem oder mehreren der Ansprueche 1 bis 7, **dadurch gekennzeichnet**, dass in der Naehe des Schneidkopfes (10) dem zu bearbeitenden Rohr (3) eine Haltelunette (38) zugeordnet wird, die von einer Platte (39) aufgenommen ist und diese Platte (39) gesteuert in Laengsrichtung der Parallelfuehrungen (6, 7) des Maschinenbettes (5) verschiebbar ist.

9. Werkzeugmaschine nach Anspruch 8, **dadurch gekennzeichnet**, dass die Lunette (38) aus Haltearmen (46, 47) besteht, die mit Schlitten (44, 45) wirkverbunden sind, die sich an schiefen Ebenen bewegen sowie aus einem vertikalen Arm (48), der von einer Kolben-Zylindereinheit (53) betaetigbar ist, und dass diese Arme (46, 47, 48) untereinander wirkverbunden sind.

10. Werzeugmaschine nach Anspruch 9, **dadurch gekennzeichnet**, dass die Enden der Haltearme (46, 47, 48) der Lunette (38) mit Kugeln (49) fuer die Aufnahme des Rohres (3) versehen sind.

11. Werkzeugmaschine nach einem oder mehreren der Ansprueche 1 bis 10, **dadurch gekennzeichnet**, dass im Anschluss an den Schneidkopf eine Aufnahmevorrichtung (54) fuer das Rohrstueck (3) vorgesehen ist und diese Vorrichtung (54) aus sich kreuzenden Armen (55, 56) besteht, die Verzahnungen (57, 58) aufweisen und im Inneren eines Halteblockes (59) angeordnet sind, dass der Halteblock (59) zwischen den sich kreuzenden Armen (55, 56) eine Welle (65) mit einem Zahnrad (64) aufnimmt, das mit den Verzahnungen (57, 58) der sich kreuzenden Arme (55, 56) in Wirkverbindung steht, dass die Welle (65) ein weiteres Zahnrad (66) aufnimmt, das mit einer Antriebszahnstange (67) wirkverbunden ist und die freien Enden der Arme (55, 56) Platten (60, 61) fuer die Aufnahme des Rohrstueckes (3) aufnehmen.

12. Werkzeugmaschine nach einem oder mehreren der Ansprueche 1 bis 11, **dadurch gekennzeichnet**, dass nach dem Schneidkopf (10) ein verschwenkbarer Arm (69) vorgesehen ist, der an seiner Oberseite eine V-foermige Aufnahme (70) fuer die Lagerung des abgetrennten Rohrstueckes (3) aufweist.

13. Werkzeugmaschine nach Patentanspruch 12, **dadurch gekennzeichnet**, dass der schwenkbare Aufnahmearm (69) an seiner Unterseite (72) schwenkbar gelagert ist und mit einem Zylinder (74) wirkverbunden ist, der Kolbenstangen (75, 76) aufweist, die von beiden Seiten des Zylinders (74) abstehen und dass jede Kolbenstange (75, 76) mit dem Bett (5) der Werkzeugmaschine verbunden ist.

14. Werkzeugmaschine nach einem oder mehreren der Ansprueche 1 bis 13, **dadurch gekennzeichnet**, dass der Antriebsmotor (90) des Wagens (8) mit einem Antriebsritzel (89) auf zwei Zahnraeder (86, 93) einwirkt, die mit drehbar gelagerten Antriebswellen (84, 85) in Verbindung stehen, dass die Antriebswellen (84, 85) Ritzel aufweisen, die mit einer Zahnstange (40) in Wirkverbindung stehen und diese Zahnstange (40) parallel zu den Fuehrungen (6, 7) der Werkzeugmaschine angeordnet sind, dass eine Welle (84) mit einer Gewindehuelse (92) in Wirkverbindung steht, um der Welle (84) eine Einstellbewegung nach oben oder nach unten zu verleihen und dass die zweite Welle (85) von Federmitteln (94) beeinflusst wird, die die Tendenz haben, die zugeordnete Welle (85) nach oben zu verschieben.

15. Werkzeugmaschine nach einem oder mehreren der Ansprueche 1 bis 14, **dadurch gekennzeichnet**, dass im Inneren des drehbaren Spannfutters (9) eine Ausnehmung vorgesehen ist, die mit einer Absaugvorrichtung (96) in Wirkverbindung steht und an der Vorderseite des Spannfutters (9) Lamellen (100) vorgesehen sind, die in Radialrichtung verschiebbar gelagert sind und ueber ein Federmittel (102) mit den Spannbacken (2) des Futters (9) wirkverbunden sind und die Lamellen (100) eine elastische Blende bilden, die das zu bearbeitende Rohr abdichtend umgreifen.

## Claims

1. Machine tool with a head (10) for the production of a laser beam for machining and severing tubes, with a machine bed (5) which is arranged parallel to a feed magazine (2) for long tubes and has parallel guides (6, 7), characterized in that the parallel guides (6, 7) receive a carriage (8) which can be driven in a controlled manner and is used for the controlled displacement of a tube (3) in the axial direction, in that the carriage (8) has a chuck (9) for holding the end of the tube, and the chuck (9) can be driven with a controlled rotary motion, and a steady (38) which can be moved in a controlled manner and serves to support the tube (3) in the immediate vicinity of the head (10) for the production of a laser beam is provided on the parallel guides (6, 7) of the machine bed (5), and holding arms (24) which support the tube (3) with its axis (X) in alignment with the axis (X') of the rotatable chuck are arranged along the machine bed (5) between the parallel guides (6, 7).

2. Machine tool according to Claim 1, characterized in that a number of bent arms (13) arranged in the longitudinal direction of the machine bed (5) are provided between the magazine (2) and the machine bed (5), in that each arm (13) is connected in articulated fashion to further levers (14, 15), the ends of which are connected by strut (16) to form a parallelogram-like device, in that the arms (14, 15) of the parallelogram are mounted on holding shafts (17, 18) and one of these holding shafts (18) is rotatably driven by way of a controllable motor (21).

3. Machine tool according to Claim 2, characterized in that each bent arm (13) has on its upper side a V-shaped receptacle (22) for the tube (3') to be transferred.

4. Machine tool according to one or more of Claims 1 to 3, characterized in that, for the positional arrangement of the end piece (26) of each holding arm (24) as a function of the diameter of the tube (3), each arm (24) is provided with a bracket (27) which has rollers (28) which are connected to an oblique plane (29) of a control strip (30) and this strip (30) can be displaced in a controlled manner in the horizontal direction.

5. Machine tool according to Claim 4, characterized in that the control strips (30) provided with an oblique plane are connected to one another by an actuating rod (31) and the actuating rod (31) is connected to an adjusting device.

6. Machine tool according to one or more of Claims 1 to 5, characterized in that each holding arm (24) is mounted pivotably in a bearing pedestal (25) which is connected to the machine bed (5), in that arranged inside the pedestal (25) there are preloaded spring means (33) which press disc-like (34) devices provided with bearings (32) against a boss-like control cam (35) operatively connected to the lower end of the arm (24) in order to impose an upward or downward component of motion on the arm.

7. Machine tool according to one or more of Claims 1 to 6, characterized in that a guiding or control cam (37) is provided underneath the carriage (8) for the displacement of the tube (3) and, during the advance motion of the carriage (8) in the direction of arrow (f), this cam influences the rollers (28) of the bracket (27) of each holding arm (24) in such a way that the holding arm (24) is pivoted downwards and, when the carriage (8) is advanced in the direction of arrow (f'), the arms (24) are pivoted upwards.

8. Machine tool according to one or more of Claims 1 to 7, characterized in that, in the vicinity of the cutting head (10), the tube (3) to be machined has assigned to it a steady (38) which is mounted on a plate (39) and this plate (39) can be displaced in a controlled manner in the longitudinal direction of the parallel guides (6, 7) of the machine bed (5).

9. Machine tool according to Claim 8, characterized in that the steady (38) comprises holding arms (46, 47) which are operatively connected to slides (44, 45) which move in oblique planes and further comprises a vertical arm (48) which can be actuated by a piston-cylinder unit (53), and in that these arms (46, 47, 48) are operatively connected to one another.

10. Machine tool according to Claim 9, characterized in that the ends of the holding arms (46, 47, 48) of the steady (38) are provided with balls (49) to hold the tube (3).

11. Machine tool according to one or more of Claims 1 to 10, characterized in that a holding device (54) for the piece of tube (3) is provided following the cutting head and this device (54) comprises intersecting arms (55, 56) which have toothing (57, 58) and are arranged inside a holding block (59), in that, between the intersecting arms (55, 56), the holding block (59) accommodates a shaft (65) with a gear wheel (64) which is in operative connection with the toothing (57, 58) of the intersecting arms (55, 56), in that the shaft (65) carries a further gear wheel (66) which is operatively connected to a driving rack (67), and the free ends of the arms (55, 56) carry plates (60, 61) to hold the piece of tube (3).

12. Machine tool according to one or more of Claims 1 to 11, characterized in that a pivotable arm (69) is provided after the cutting head (10), this arm having on its upper side a V-shaped receptacle (70) to support the piece of tube (3) cut off.

13. Machine tool according to Patent Claim 12, characterized in that the pivotable receiving arm (69) is pivotably mounted at its bottom end (72) and is operatively connected to a cylinder (74) which has piston rods (75, 76) which project from both ends of the cylinder and in that each piston rod (75, 76) is connected to the bed (5) of the machine tool.

14. Machine tool according to one or more of Claims 1 to 13, characterized in that the driving motor (90) of the carriage (8) acts by means of a driving pinion (89) on two gear wheels (86, 93) which are connected to rotatably mounted drive shafts (84, 85), in that the drive shafts (84, 85) have pinions which are in operative connection with a rack (40), and this rack (40) is arranged parallel to the guides (6, 7) of the machine tool, in that a shaft (84) is in operative connection with a threaded sleeve (92) in order to impart an upward or downward adjusting motion to the shaft (84) and in that the second shaft (85) is influenced by spring means (94) which tend to displace the associated shaft (85) upwards.

15. Machine tool according to one or more Claims 1 to 14, characterized in that an opening is provided in the interior of the rotatable chuck (9), this opening being in operative connection with an extraction device (96), and blades (100) which are mounted in such a way as to be displaceable in the radial direction and are operatively connected to the clamping jaws (2) of the chuck (9) by a Spring means (102) are provided at the front of the chuck (9), and the blades (100) form a flexible screen which surrounds the tube to be machined, sealing it off.

## Revendications

1. Machine-outil, comprenant une tête (10) pour la production d'un faisceau laser, pour l'usinage et le tronçonnage de tubes (3), un banc de machine (5) qui est disposé parallèlement à un magasin d'alimentation (2) en tubes longs et comprend des guidages parallèles (6, 7), caractérisée en ce que les guidages parallèles (6, 7) logent un chariot (8) susceptible d'être entraîné de façon commandée, pour le déplacement commandé d'un tube (3), dans la direction axiale, que le chariot (8) comprend un mandrin de serrage (9) pour la réception d'une extrémité de tube, et le mandrin de serrage (9) peut être entraîné en un mouvement rotatif commandé, et sur les guidages parallèles (6, 7) du banc de machine (R) est prévue une lunette (38) déplaçable de façon commandés pour le logement ou support du tube (3) au voisinage immédiat de la tête (10) pour la production d'un faisceau laser, et entre les guidages parallèles (6, 7), le long du banc de machine (5), sont disposés des bras de retenue (24) qui supportent le tube (3) avec son axe (X) en coincidence avec l'axe (X') du mandrin de serrage rotatif.

2. Machine-outil selon la revendication 1, caractérisée en ce qu'entre le magasin (2) et le banc de machine (5) est prévu un certain nombre de bras coudés (13) qui sont disposés dans la direction longitudinale du banc de machine (5), que chaque bras (13) est relié de façon articulée à d'autres leviers (14, 15) dont les extrémités sont reliées par une entretoise (16) pour former un dispositif en forme d'un parallélogramme, que les bras (14, 15) du parallélogramme sont reçus par des arbres de retenue (17, 18) et l'un des arbres de retenue (18) est entraîné en rotation par un moteur commandé (21).

3. Machine-outil selon la revendication 2, caractérisée en ce que chaque bras coudé (13) reçoit à son côté supérieur un logement en forme de V (22) pour le tube (3') à transporter.

4. Machine-outil selon l'une des revendications 1 à 3, caractérisée en ce que, pour la disposition de support de la pièce d'extrémité (26) de chaque bras de retenue (24), en fonction du diamètre du tube (3), chaque bras (24) est pourvu d'un étrier (27) qui comprend des rouleaux de glissement (28) qui sont en liaison avec un plan incliné (29) d'une baguette de commande (30) et cette baguette (30) est déplaçable, de façon commandée, dans la direction horizontale.

5. Machine-outil selon la revendication 4, caractérisée en ce que les baguettes de commande (30) pourvues d'un plan incliné sont reliées les unes aux autres par une tige d'actionnement (31) et que la tige d'actionnement (31) est reliés à un dispositif de réglage.

6. Machine-outil selon l'une des revendications précédentes, caractérisée en ce que chaque bras de retenue (24) est reçu, de façon pivotante, par un sabot de support (25) qui est relié au banc de machine (8), qu'à l'intérieur du sabot de support (25) sont disposés des moyens de ressort précontraints (33) qui poussent des dispositifs en forme de disques (34) et pourvus de paliers (32), contre une courbe de commande en forme de came qui est reliée opérativement à l'extrémité inférieure du bras (24) pour imposer au bras une composante de mouvement orientée vers le haut ou vers le bas.

7. Machine-outil selon l'une des revendications 1 à 6, caractérisée en ce que sous le chariot (8) est prévu pour le déplacement du tube (3) une courbe de guidage ou de commande (37) qui, pendant le mouvement d'avance du chariot (8) en direction de la flèche f, influence les rouleaux (28) de l'étrier (27) de chaque bras de retenue (24) de telle façon que le bras de retenue (24) pivote vers le bas et, lors de l'avance du chariot (8) dans la direction de la flèche f' s'effectue un pivotement des bras (24) vers le haut.

8. Machine-outil selon l'une des revendications 1 à 7, caractérisée en ce qu'à proximité de la tête de coupe (10) est associé au tube à usiner (3) une lunette de retenue (38) qui est reçue par une plaque (39) et que cette plaque (39) est déplaçable dans la direction longitudinale des guidages parallèles (6, 7) du banc de machine (5), de façon commandée.

9. Machine-outil selon la revendication 8, caractérisée en ce que la lunette (38) est constituée de bras de retenue (46, 47) qui sont reliés opérativement à un coulisseau (44, 45) qui se déplace à des plans inclinés, ainsi que d'un bras vertical (48) qui est actionnable par un dispositif vérin à piston (53), et en ce que les bras (46, 47, 48) sont reliés opérativement les uns aux autres.

10. Machine-outil selon la revendication 9, caractérisée en ce que les extrémités des bras de retenue (46, 47, 48) de la lunette (38) sont pourvus de billes (49) pour la réception du tube (3).

11. Machine-outil selon l'une des revendications 1 à 10, caractérisée en ce qu'à la suite de la tête de coupe est disposé un dispositif de réception (54) pour la pièce de tube (3) et que ce dispositif (54) se compose de bras qui se croisent (55, 56) et comportent des dentures (57, 58) et sont disposés à l'intérieur d'un sabot de retenue (59), que le sabot de retenue (59) reçoit entra les bras se croisant (55, 56) un arbre (65) avec une roue dentée (64) qui est reliée opérativement aux dentures (57, 58) des bras qui se croisent (55, 56), que l'arbre (65) reçoit une autre roue dentée (66), qui est reliée opérativement à une crémaillère d'entraînement (67), et les extrémités libres des bras (55, 56) reçoivent des plaques (60, 61) pour la réception de la pièce de tube (3).

12. Machine-outil selon l'une des revendications 1 à 11, caractérisée en ce qu'après la tête de coupe (10) est prévu un bras pivotant (69) qui comprend, à sa face ou son côté supérieur un logement en forme de V (70) pour le logement de la pièce de tube découpée (3).

13. Machine-outil selon la revendication 12, caractérisée, en ce que le bras de réception pivotant (69) est supporté de façon pivotante à son côté inférieur (72) et est relié opérativement à un vérin (74) qui comprend des tiges de piston (75, 76) qui font saillie des deux côtés du vérin (74), et que chaque tige de piston (75, 76) est reliée au banc (5) de la machine-outil.

14. Machine-outil selon l'une des revendications 1 à 13, caractérisée en ce que le moteur d'entraînement (90) du chariot (8) agit par un pignon d'entraînement (89) sur deux roues dentées (86, 93) qui sont reliées à des arbres d'entraînement (84, 85) logés de façon rotative, que les arbres (84, 85) comprennent des pignons qui sont reliés opérativement à une crémaillère (40) et cette crémaillère (40) est disposée parallèlement aux guidages (6, 7) de la machine-outil, qu'un arbre (84) est relié opérativement à un manchon fileté (92) pour conférer à l'arbre (84) un mouvement de réglage ou d'ajustage vers le haut ou vers le bas, et que le deuxième arbre (85) est influencé par des moyens de ressort (94) qui ont tendance à déplacer l'arbre associé (85) vers le haut.

15. Machine-outil selon l'une des revendications 1 à 14, caractérisée en ce qu'à l'intérieur du mandrin de serrage rotatif (9) est prévu un évidement qui est relié opérativement à un dispositif d'aspiration (96) et au côté avant du mandrin de serrage (9) sont prévues des lamelles (100) qui sont déplaçables dans la direction radiale et sont reliées opérativement par un moyen de ressort (102) à des mâchoires de serrage (2) du mandrin (9) et les lamelles (100) forment un diaphragme élastique qui entoure de façon obturante le tube à usiner.
